# NEUE EUROPÄISCHE PATENTSCHRIFT

(11) **EP 1 434 679 B2**
(45) Veröffentlichungstag und Bekanntmachung des Hinweises auf die Entscheidung über den Einspruch: **19.06.2013**
(45) Hinweis auf die Patenterteilung: 13.06.2007
(21) Anmeldenummer: 02760038.6
(22) Anmeldetag: 02.10.2002
(51) Int. Cl.: B29C 47/42, B29C 47/58

(54) **RINGEXTRUDER MIT TEILGEKAPPTEN FÖRDERELEMENTEN IM EINZUGSBEREICH**
RING EXTRUDER COMPRISING PARTIALLY CAPPED TRANSPORT ELEMENTS IN THE FEEDING REGION
EXTRUDEUSE ANNULAIRE A ELEMENTS DE REFOULEMENT A CONTREFORTS PARTIELS DANS LA ZONE D'ALIMENTATION

(30) Priorität: 11.10.2001 DE 10150006
(43) Veröffentlichungstag der Anmeldung: 07.07.2004
(73) Patentinhaber: Bühler AG, 9240 Uzwil (CH)
(72) Erfinder: INNEREBNER, Federico, CH-8049 Zürich (CH); CHRISTEL, Andreas, CH-9524 Zuzwil (CH); STURM, Achim-Philipp, CH-9244 Niederuzwil (CH); SCHWEIKLE, Jürgen, 9527 Niederhelfenschwil (DE)
(74) Vertreter: Hepp Wenger Ryffel AG
(86) Internationale Anmeldenummer: PCT/CH2002/000548
(87) Internationale Veröffentlichungsnummer: WO 2003/031153

(56) Entgegenhaltungen:
- DE-A- 10 055 772
- DE-A- 19 854 689
- DE-C- 1 960 766
- DE-C- 19 604 228
- US-A- 1 356 296

## Beschreibung

Die Erfindung bezieht sich auf einen Mehrwellen-Extruder zum kontinuierlichen Bearbeiten und/oder Verarbeiten eines Schüttgutes, insbesondere eines pulverförmigen, körnigen oder flockigen Produktes, gemäss Anspruch 1 sowie auf ein Verfahren gemäss Anspruch 19 zum Befüllen der Prozessräume eines derartigen Mehrwellen-Extruders.

Mehrwellen-Extruder zum Bearbeiten und/oder Verarbeiten von Schüttgütern sind bekannt. Eine besondere Gruppe von Mehrwellen-Extrudern weisen parallel aneinander liegende Wellen auf, die den Hohlraum zur Verarbeitung des Produktes im Innern des Extruders in einen ersten Prozessraum und einen zweiten Prozessraum unterteilen. In den Bereichen, in denen die Bearbeitungselemente dichtkämmende Förderelemente sind, besteht im wesentlichen keine Verbindung, die einen Materialaustausch zwischen dem ersten Prozessraum und dem zweiten Prozessraum zumindest in diesem Bereich ermöglicht. Allenfalls können Gase und Spuren von feinstverteiltem Produkt von dem einen in den anderen Prozessraum gelangen. Die fehlende Möglichkeit eines Produktaustausches zwischen den beiden Prozessräumen ist besonders im Einzugsbereich eines derartigen Mehrwellen-Extruders mit mehreren Prozessräumen nachteilig, wenn nur einer der Prozessräume über die Zufuhröffnung des Extruders mit Produkt befüllbar ist. Der andere oder die anderen Prozessräume in diesem Einzugsbereich werden daher nicht oder mit äusserst kleinen Mengen des Produktes befüllt. Dies bedeutet eine Verschwendung von Prozessraumvolumen und eine Begrenzung der Produkt-Einzugskapazität des Extruders. Dies ist besonders nachteilig im Falle eines Ringextruders mit mehreren in einem Hohlraum seines Gehäuses kranzartig angeordneten Wellen, die parallel zur Axialrichtung des Extruders verlaufen und einen inneren Prozessraum innerhalb des Kranzes sowie einen äusseren Prozessraum ausserhalb des Kranzes bilden. Hier wird über die Zufuhröffnung nur der äussere Prozessraum ausserhalb des Kranzes mit Produkt befüllt, während der innere Prozessraum im Bereich der Zufuhröffnung ungenutzt bleibt. Durch diese Einzugsbegrenzung wird letztendlich nur ein Bruchteil des möglichen Durchsatzes durch diesen Ringextruder realisiert.

Einen Lösungsansatz hierfür bietet die DE-196 04 228, die einen derartigen Ringextruder zum kontinuierlichen Bearbeiten von fliessfähigen Materialen offenbart. Hier wird das eingangs genannte Problem der Einzugsbegrenzung dadurch gelöst, dass im Bereich der Material-Zufuhröffnung in den Prozessraum des Ringextruders wenigstens eine Öffnung in dem Wellenkranz durch Weglassen der Fördereigenschaften wenigstens eines Bearbeitungselementes gebildet wird. Statt eines fördernden Schneckenelements wird in diesem Bereich eine Distanzhülse mit einer glatten äusseren Zylinderwand auf den Dorn mindestens einer der Wellen des Kranzes im Bereich der Material-Zufuhröffnung verwendet. Dies ermöglicht zwar einen Materialaustausch zwischen dem äusseren und dem inneren Prozessraum im Bereich der Zufuhröffnung, doch wird dies durch Verzicht der fördernden Eigenschaften in diesem Bereich erkauft. Dies führt dazu, dass ein Teil des durch die Material-Zufuhröffnung zugeführten Produktes in den Toträumen des Einfüllbereichs verbleibt, so dass das Volumen des inneren Prozessraums nach wie vor nicht optimal genutzt wird.

Der Erfindung liegt die Aufgabe zugrunde, die eingangs genannten Probleme des Standes der Technik zu lösen und insbesondere die Einzugsbegrenzung bei einem Ringextruder der eingangs genannten Bauart zu überwinden.

Diese Aufgabe wird durch die kennzeichnenden Merkmale des Anspruchs 1 vorrichtungsmässig sowie durch die Merkmale des Anspruchs 19 verfahrensmässig gelöst.

Dieser erfindungsgemässen Lösung liegt der Gedanke zugrunde, einen Steg bei mindestens 2-gängigen Elementen zumindest teilweise zu entfernen. Im Einzugsbereich kann man nämlich auf die ständige Selbstreinigung und dichte Kämmung der Erdmenger-Profile verzichten. Dies ermöglicht aber einen Produktaustausch zwischen dem inneren Prozessraum und dem äusseren Prozessraum des eingangs genannten Ringextruders. Somit kann das gesamte Volumen sowohl des inneren als auch des äusseren Prozessraums des Extruders über seine gesamte Bearbeitungslänge genutzt werden. Ausserdem können aufgrund der nach wie vor im gesamten Einzugsbereich vorhandenen Förderwirkung der nur teilgekappten Förderelemente Totvolumina im Einzugsbereich verhindert werden. Das Produkt wird somit von Anfang an auf beide Prozessräume gleichmässig verteilt, d.h., dass die gleiche Produktmenge pro Volumen sowohl in den inneren als auch in den äusseren Prozessraum eingezogen und ständig aus diesem Bereich weggefördert wird. Es erübrigt sich dadurch der Einsatz nicht dichtkämmender Elemente förderabseitig vom Einzugsbereich für den Ausgleich der Produktmenge im inneren und äusseren Prozessraum.

Der wesentliche erfindungsgemässe Vorteil, wonach es im Einfüllbereich keinerlei Totraum gibt, bedeutet, dass das Produkt keinen Raum findet, in dem es sich ablagern kann. Durch diese 100%ige Wegförderung des Produktes aus dem Einfüllbereich wird gewährleistet, dass das gesamte zur Verfügung stehende freie Volumen zur Aufnahme von neu zugegebenem Produkt zur Verfügung steht. Es gibt keinerlei Behinderung durch liegengebliebenes Produkt und keinerlei unnötige Verweilzeit des Produktes durch nachgeschaltete "Ausgleichselemente". Diese entfallen somit gänzlich, was zu einer Verringerung der Investitionskosten für einen derartigen Extruder als auch zu einer Verringerung der gesamten Verweilzeit des Produktes bei einem derartigen Prozess führt. Für das erfindungsgemässe Verfahren kann durch die Einsparung derartiger "Ausgleichszonen", die gemäss der Erfindung vollständig im modifizierten Einfüllbereich enthalten sind, der Prozessraum des Extruders anderweitig genutzt werden oder entfallen, was zu einer insgesamt kürzeren Verfahrenszone führt und somit Investitions- und Platzbedarf des erfindungsgemässen Extruders verringert. Ein weiterer Nachteil derartiger "Ausgleichszonen" des Standes der Technik kann auch sein, dass sie in einem bereits prozesstechnisch anderweitig genutzten Bereich des Verfahrens liegen, wie z.B. der Aufschmelzzone. Durch den Wegfall dieser "Ausgleichszonen" reicht es in diesem Fall aus, z.B. lediglich dichtkämmende Elemente für das Aufschmelzen zu verwenden, was zu einer insgesamt kürzeren Verweilzeit des Produktes im Extruder und im Falle von PET zu einer geringeren Schädigung des Produktes führt.

Erfindungsgemäß werden im Bereich der Zufuhröffnung nur fördernde Schneckenelemente verwendet, wobei insbesondere das wenigstens eine fördernde Schneckenelement zum benachbarten Schneckenelement hin einen Spalt längsseits der Schneckenelemente aufweist, dessen projizierte Fläche, die in der Ebene liegt, in der die beiden Längsachsen bzw. Drehachsen der beiderseits des Spalts angeordneten Wellen verlaufen, eine radiale Abmessung ΔR und eine axiale Abmessung ΔL längsseits der Schneckenelemente aufweist.

Vorzugsweise ist dieser Spalt, den das mindestens eine fördernde Schneckenelement zum benachbarten Schneckenelement hin bildet, derart bemessen, dass seine radiale Abmessung ΔR im Bereich zwischen etwa 1/30 und 1/2 des Schneckenwellen-Aussendurchmessers Da und insbesondere zwischen 1/10 und 1/4 des Schneckenwellen-Aussendurchmessers liegt, wobei sich die axiale Abmessung ΔL des Spaltes längsseits der Schneckenelemente aus der Abmessung ΔR und der Steigung der Schneckenelemente ergibt und insbesondere etwa 2ΔR beträgt. Dies ermöglicht sowohl eine ausreichende fördernde Wirkung entlang des Produktförderrichtung als auch eine ausreichende austauschende Wirkung zwischen dem äusseren und dem inneren Prozessraum des Extruders.

Zweckmässigerweise ist die Steigung der Stege der Schneckenelemente im Einzugsbereich mindestens das 0,5-fache, vorzugsweise mindestens das 1,0-fache des Aussendurchmessers Da der Schneckenelemente. Dies ermöglicht ein zügiges Wegfördern des aufgegebenen Produktes aus dem Bereich der Zufuhröffnung. Dies ist besonders vorteilhaft für die Aufbereitung von rezykliertem PET (RPET) in einem derartigen Ringextruder.

Zweckmässigerweise liegt das Verhältnis von Aussendurchmesser Da zu Innendurchmesser Di des Schneckenelementes zwischen 1,4 und 1,9.

Vorzugsweise verläuft die Vorderflanke der fördernden Schneckenelemente zumindest am radialen Randbereich der Stege der Schneckenelemente senkrecht zur Axialrichtung des Extruders. Dies begünstigt die fördernde Wirkung der Schneckenelemente.

Vorzugsweise ist auch die Hinterflanke der fördernden Schneckenelemente zumindest an ihrem radialen Randbereich der Stege senkrecht zur Axialrichtung des Extruders ausgebildet. Dies trägt ebenfalls zu einer Steigerung der Aufnahmekapazität des erfindungsgemässen Ringextruders für lockeres Schüttgut wie RPET-Flocken bzw. RPET-Schnitzeln bei.

Weitere vorteilhafte Ausgestaltungen der Vorderflanke am radialen Randbereich eines Steges von Förderelementen sind dadurch gekennzeichnet, dass die Vorderflanken in der Förderrichtung überhängend gegenüber der Senkrechten zur Axialrichtung verlaufen oder dass die Vorderflanken zumindest am Randbereich der Stege konkav ausgebildet sind. Alternativ hierzu oder zusätzlich können die Vorderflanken (aktiven Flanken) am Randbereich der Stege auch hinterschnitten sein. All diese Massnahmen führen ebenfalls zu einer Verbesserung der Förderkapazität derartig ausgebildeter Schneckenelemente.

Bei einer besonders vorteilhaften Ausführung der Erfindung ist der sich im Bereich der Zufuhröffnung befindende axiale Teilbereich des die Wellen enthaltenden Hohlraums radial aufgeweitet und erstreckt sich diese radiale Aufweitung entlang eines Teils des Wellenkranzes in dessen Umfangsrichtung. Durch diese Massnahme wird das Prozessraumvolumen in diesem axialen Teilbereich bei der Zufuhröffnung vergrössert, was für das Einzugsverhalten des erfindungsgemässen Extruders für lockere Schüttgüter besonders vorteilhaft ist. Insbesondere bei der Aufbereitung von RPET, das während seiner Bearbeitung kompaktiert und später aufgeschmolzen wird, wirkt sich dies besonders vorteilhaft aus.

Vorzugsweise erstreckt sich hierbei die Aufweitung entlang des Umfangs des Wellenkranzes in Umfangsrichtung beiderseits von der Zufuhröffnung weg und erstreckt sich jeweils zwischen der radial aussenliegenden Fläche des Hohlraums und dem Wellenkranz. Dies ermöglicht eine besonders wirkungsvolle Fütterung des Ringextruders sowohl in seinem äusseren Prozessraum durch die Aufweitung entlang des Umfangs des Wellenkranzes sowie in seinem inneren Prozessraum durch den Spalt bzw. die Spalte hindurch. Zur Steigerung der Einzugsleistung kann an der Zufuhröffnung eine Stopfschnecke angebracht sein. Zusätzlich kann das Extrudergehäuse auch noch in der Nähe der Zuführöffnung Entlüftungsöffnungen aufweisen, an die vorzugsweise ein Druck unterhalb des atmosphärischen Drucks angelegt wird. Auf diese Weise lässt sich die Einzugsleistung für loses Schüttgut bei dem erfindungsgemässen Extruder noch weiter steigern.

Bei einer weiteren bevorzugten Ausführung ist bei dem erfindungsgemässen Extruder bei mindestens einem mehrgängigen Förderelement im Einfüllbereich mindestens ein Steg entfernt. So kann z.B. bei einem zweistegigen Förderelement einer der Stege völlig entfernt sein oder bei einem dreigängigen Förderelement sogar zwei der drei Stege völlig entfernt sein. Es reicht aus, dass einer der Stege bei jedem Förderelement durchgehend vorhanden ist und mit seinem benachbarten Förderelement dichtkämmend und sich gegenseitig abstreifend zusammenwirkt. Der durch die nicht vorhandenen Stege gewonnene Freiraum wirkt sich ebenfalls positiv auf das Einzugsverhalten des erfindungsgemässen Ringextruders aus.

Bei dem erfindungsgemässen Verfahren gemäss Anspruch 19 lässt sich der eingangs beschriebene erfindungsgemässe Mehrwetten-Extruder mit dem zu bearbeitenden und/oder zu verarbeitenden Schüttgut, insbesondere einem pulverförmigen, körnigen oder flockigen Produkt, befüllen, wobei das Produkt an die Aussenseite des Wellenkranzes herangeführt wird und im Bereich der Zufuhröffnung auf den inneren Prozessraum und den äusseren Prozessraum des Mehrwellen-Extruders verteilt wird. Mit anderen Worten wird durch das in mindestens einem Teilbereich entlang der Axialrichtung nicht-dichtkämmende wenigstens eine fördernde Schneckenelement ein Teil des zugeführten Produktstroms in den inneren Prozessraum gezogen und axial befördert. Das Einziehen eines Teils des Produktstroms in den inneren Prozessraum erfolgt dabei durch den mindestens einen Spalt, der sich zwischen dem wenigstens einen fördernden Schneckenelement und einem benachbarten Schneckenelement bildet. Im Bereich der Zufuhröffnung wird dabei der gesamte innere Prozessraum durch die teilweise gekappten aber dennoch durchgehend fördernden Schneckenelemente ständig entleert. Das Heranführen des Produktes an der Aussenseite des Wellenkranzes kann durch Schwerkraft und/oder mittels einer Stopfschnecke erfolgen. Indem man den Prozessraum des Ringextruders im Bereich der Zufuhröffnung auf einen Druck unterhalb des Atmosphärendrucks hält, lässt sich eine weitere Steigerung der Einzugsleistung erzielen.

Weitere Vorteile, Merkmale und Anwendungsmöglichkeiten der Erfindung ergeben sich aus der nun folgenden Beschreibung bevorzugter Ausführungsbeispiele der Erfindung.
- Fig. 1: zeigt einen Schnitt durch einen erfindungsgemässen Ringextruder entlang einer Ebene X-X (siehe Fig. 2) senkrecht zur Axialrichtung A durch den Extruder.
- Fig. 2: ist eine schematische Draufsicht auf den erfindungsgemässen Ringextruder von Fig. 1.
- Fig. 3A: ist eine Ansicht der Schneckenelemente im Einzugsbereich eines Mehrwellen-Extruders gemäss einem ersten Ausführungsbeispiel im Schnitt senkrecht zur Axialrichtung A.
- Fig. 3B: zeigt den Einzugsbereich von Fig. 3A aus der Richtung des Pfeils P betrachtet.
- Fig. 4A: ist eine Ansicht der Schneckenelemente im Einzugsbereich eines Mehrwellen-Extruders gemäss einem zweiten Ausführungsbeispiel im Schnitt senkrecht zur Axialrichtung A.
- Fig. 4B: zeigt den Einzugsbereich von Fig. 4A aus der Richtung des Pfeilers P betrachtet.
- Fig. 5A: ist eine Ansicht der Schneckenelemente des Einzugsbereichs eines Mehrwellen-Extruders gemäss einem dritten Ausführungsbeispiels im Schnitt senkrecht zur Axialrichtung A.
- Fig. 5B: zeigt den Einzugsbereich von Fig. 5A aus der Richtung des Pfeils P betrachtet.
- Fig. 6: ist ein Schnitt durch den Einzugsbereich eines Ringextruders gemäss einem vierten Ausführungsbeispiel senkrecht zur Axialrichtung A.

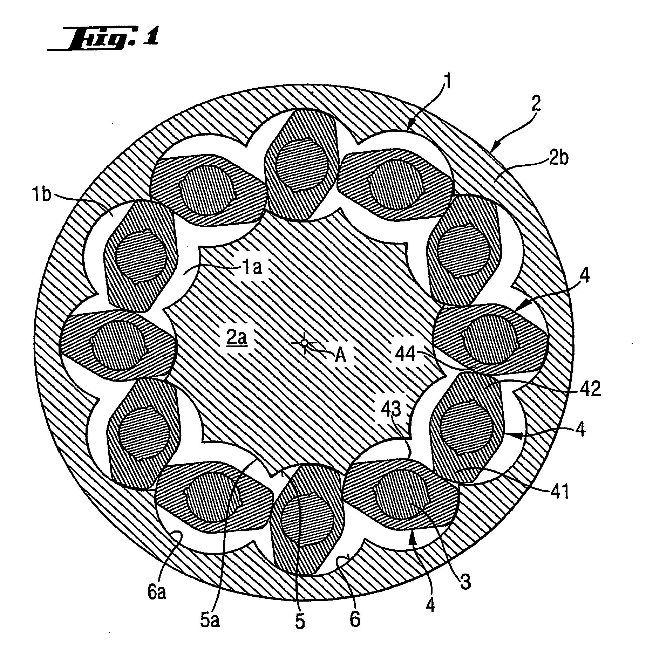

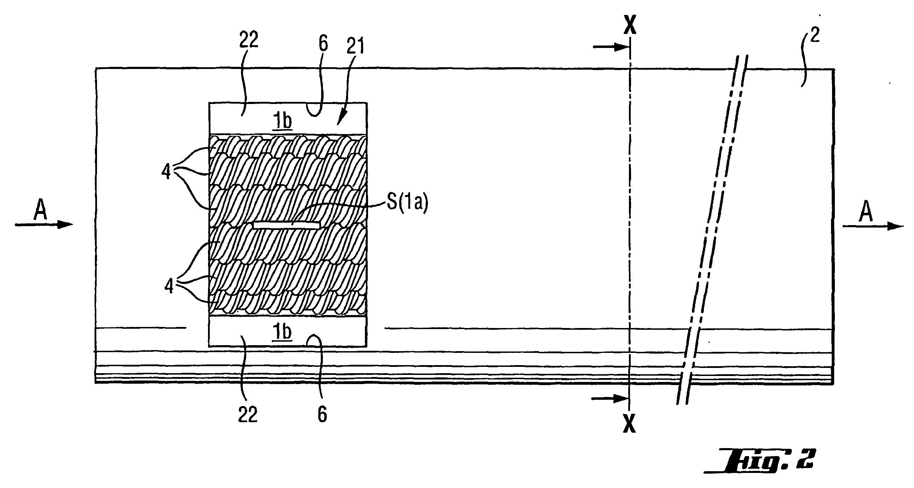

Fig. 1 ist eine Schnittansicht durch einen 12-welligen Ringextruder senkrecht zur Axialrichtung A entlang einer Schnittebene X-X (siehe Fig. 2). Diese Schnittansicht beschreibt sowohl den Schnitt durch einen Ringextruder gemäss dem Stand der Technik als auch durch einen Ringextruder gemäss der vorliegenden Erfindung. Das Extrudergehäuse 2 besteht aus einem Kern 2a und einem Aussengehäuse 2b. Zwischen dem Kern 2a und dem Aussengehäuse 2b erstreckt sich ein kranzartiger Hohlraum 1, der durch in diesem Hohlraum 1 kranzartig angeordnete Wellen 3, die jeweils ein Bearbeitungselement bzw. Förderelement 4 tragen, in einen inneren Prozessraum 1a und einen äusseren Prozessraum 1b unterteilt wird. Bei den hier gezeigten Bearbeitungselementen 4 handelt es sich um 2-gängige Förderelemente mit jeweils einem ersten Gang 41 und einem zweiten Gang 42. Das Schneckenprofil (entlang der Axialrichtung A) ist vorzugsweise so ausgebildet, dass sich benachbarte Förderelemente 4 stets gegenseitig berühren, so dass der erste Steg 41 und der zweite Steg 42 eines Förderelements 4 mit dem Kern 43 bzw. 44 eines jeweils benachbarten Förderelements 4 in Berührung ist. Dieses Profil (Erdmenger-Profil) garantiert, dass sich sämtliche Förderelemente 4 stets gegenseitig abstreifen. Gleichzeitig wird dadurch auch zumindest in diesem axialen Bereich des Ringextruders der innere Prozessraum 1a gegenüber dem äusseren Prozessraum 1b gegenüber einem Austausch von Produkt zwischen den beiden Prozessräumen abgegrenzt. Allenfalls sehr geringe Mengen an Produkt und Gas können zwischen dem inneren Prozessraum 1a und dem äusseren Prozessraum 1b ausgetauscht werden. Auch zwischen den konkaven inneren Zylindersegmenten 5a der radial innen liegenden Fläche 5 des Hohlraums 1 und den Stegen 41, 42 der Förderelemente 4 findet eine ständige Selbstreinigung statt. Genauso werden die konkaven äusseren Zylindersegmente 6a der radial aussen liegenden Fläche 6 durch die Stege 41, 42 der Förderelemente 4 stets berührt und von ggf. anhaftendem Produkt befreit. Die Bearbeitungselemente (z.B. Förderelemente) 4 sind jeweils durch eine formschlüssige drehfeste Verbindung an ihrer jeweiligen Welle 3 befestigt.

Fig. 2 ist eine schematische Draufsicht durch einen erfindungsgemässen Ringextruder gemäss Fig. 1. Durch eine Zufuhröffnung 21 im Extrudergehäuse 2 erkennt man den Wellenkranz mit seinen Bearbeitungselementen/Förderelementen 4. Insgesamt sind sechs Wellen, d.h. die obere Hälfte des Wellenkranzes, sichtbar. Zwischen der radial aussen liegenden Fläche 6 des äusseren Prozessraumes 1b und der äusseren Fläche des durch die Bearbeitungselemente 4 gebildeten Wellenkranzes ist eine radiale Aufweitung 22 des äusseren Prozessraumes 1b vorgesehen. Ausserdem sind die beiden obersten Bearbeitungselemente 4 derart "gekappt", dass zwischen ihnen ein Schlitz S besteht, durch den der äussere Prozessraum 1b mit dem inneren Prozessraum 1a (siehe Fig. 1) in Verbindung steht. Selbstverständlich könnten statt dem einen gezeigten Schlitz S auch zwischen den anderen benachbarten Bearbeitungselementen/Förderelementen 4 entsprechende Schlitz vorgesehen sein. Dieser Schlitz bzw. diese Schlitze sowie die radiale Aufweitung 22 des äusseren Prozessraums bewirken in ihrer Kombination eine beachtliche Steigerung der Einzugsleistung des erfindungsgemässen Ringextruders für Schüttgut. Besonders ausgeprägt ist die Steigerung der Einzugsleistung für lockeres Schüttgut, wie z.B. in Schnitzeln bzw. Flocken vorliegendes rezykliertes RPET.

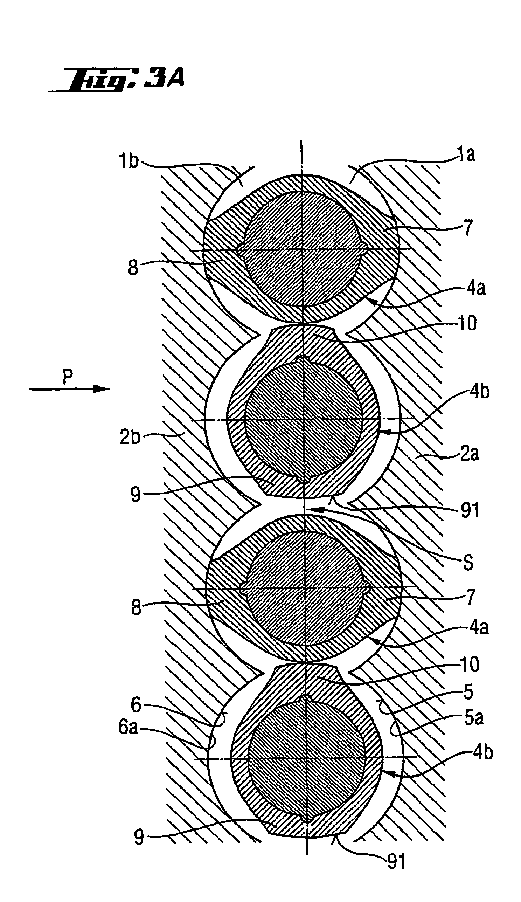

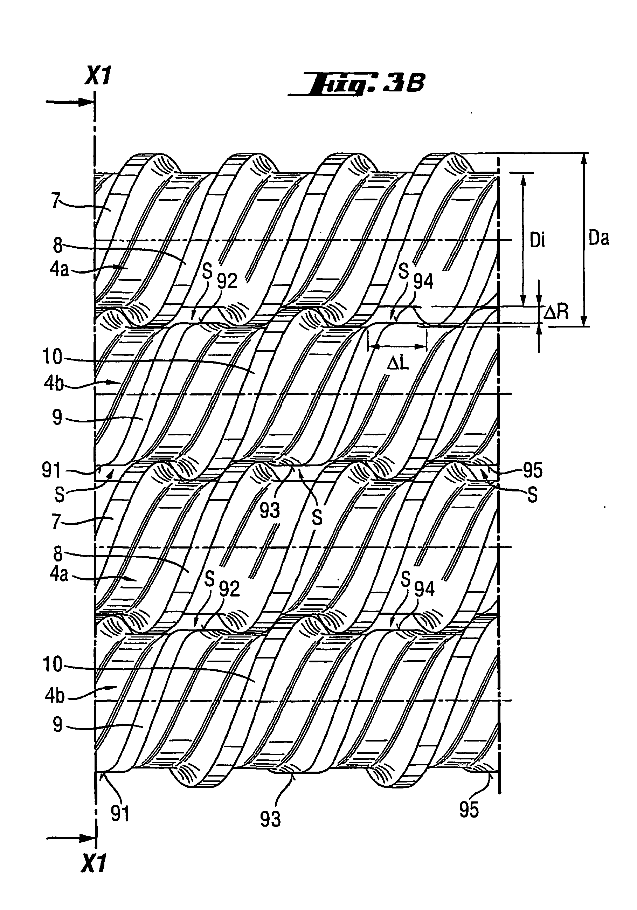

Fig. 3A und 3B zeigen die Schneckenelemente im Einzugsbereich eines erfindungsgemässen Mehrwellen-Extruders. Der Einfachheit halber sind die Wellen mit den Förderelementen 4a und 4b nicht in ihrer kranzartigen Anordnung gezeigt, sondern sie sind in einer ebenen Anordnung dargestellt, die den nach aussen offenen äusseren Prozessraum 1b (siehe Fig. 1 und Fig. 2) gegenüber dem inneren Prozessraum 1a abgrenzt. Fig. 3A zeigt den Einzugsbereich in einem zur Axialrichtung A senkrechten Schnitt entlang der Schnittebene X1-X1 von Fig. 3B. Fig. 3B zeigt den Einzugsbereich der Fig. 3A aus der durch den Fig. 3A gekennzeichneten Blickrichtung.

Bei den in Fig. 3A und 3B dargestellten Förderelementen handelt es sich jeweils um 2-gängige Förderelemente 4a, 4b, 4a, 4b, wobei die Förderelemente 4a jeweils zwei vollständige, nicht-gekappte Stege 7 und 8 aufweisen, während die Förderelemente 4b jeweils einen teilgekappten Steg 9 und einen vollständigen nicht-gekappten Steg 10 aufweisen. Der teilgekappte Steg 9 der Förderelemente 4b ist teilweise gekappt, so dass in den Bereichen 91, 92, 93, 94 und 95, bei denen der gekappte Steg 9 den dem Kern des jeweils benachbartem Förderelements 4a gegenüber liegt, jeweils ein Spalt S zwischen den nicht-gekappten Förderelementen 4a und den teilweise gekappten Förderelementen 4b gebildet wird. Der Schlitz S hat eine radiale Abmessung ΔR und axiale Abmessung ΔL. Wenn sich die Förderelemente 4a und 4b während des Betriebes drehen, bewegen sich diese zwischen den benachbarten Förderelementen 4a und 4b ausgebildeten Schlitze S in der Axialrichtung A hin und her. In dem in Fig. 3A und 3B gezeigten Fall beträgt das Verhältnis von Schnecken-Aussendurchmesser Da zu Schnecken-Innendurchmesser Di etwa 1,3.

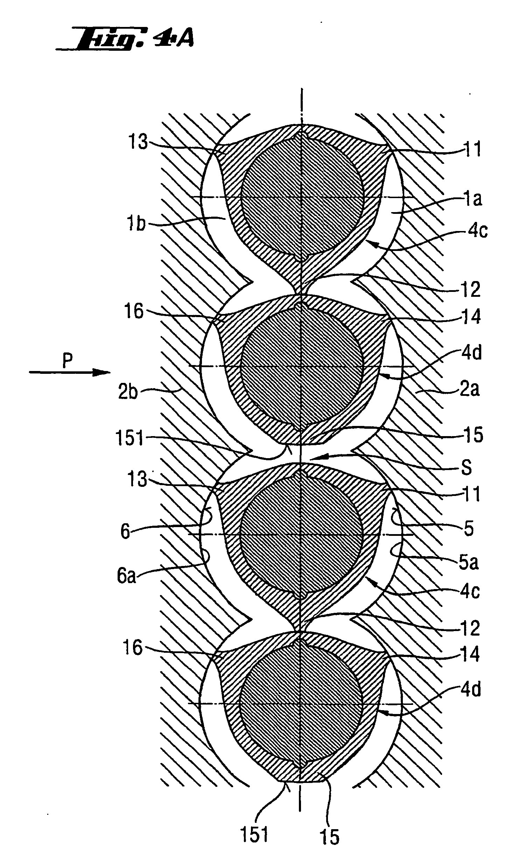

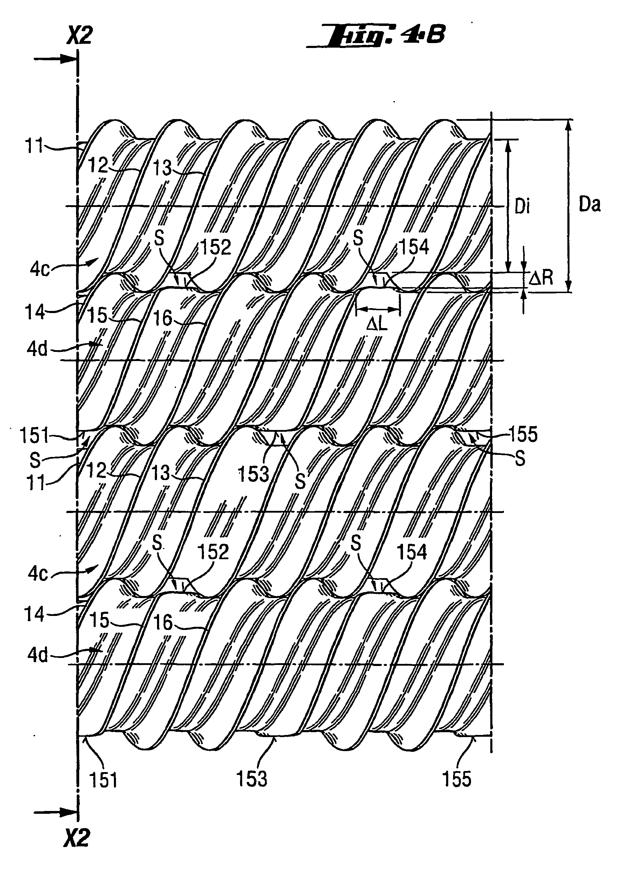

Fig. 4A und 4B zeigen den Einzugsbereich des erfindungsgemässen Mehrwellen-Extruders gemäss einem zweiten Ausführungsbeispiel der vorliegenden Erfindung. Fig. 4A und 4B sowie die Schnittebene X2-X2 entsprechen im wesentlichen der Fig. 3A und 3B bzw. der Schnittebene X1-X1. Der einzige Unterschied besteht darin, dass anstelle 2-gängiger Förderelemente 4a und 4b im vorliegenden Falle 3-gängige Förderelemente 4c, 4d, 4c, 4d vorliegen. Die Förderelemente 4c besitzen nicht-gekappte Stege 11, 12 und 13, während bei den Förderelementen 4d einer der drei Stege 14, 15 und 16 mindestens teilweise gekappt ist. Dieser mindestens teilweise gekappte Steg 15 der Förderelemente 4d bewirkt im Zusammenspiel mit den nicht-gekappten Förderelementen 4c ebenfalls die Bildung von Spalten S zwischen benachbarten Förderelementen 4c und 4d. In den Bereichen 151, 152, 153, 154 und 155, bei denen der gekappte Bereich des Stegs 15 des Förderelements 4d dem Kern des Förderelements 4c mit nicht-gekappten Stegen gegenüber liegt, wird jeweils ein Spalt S mit einer radialen Ausdehnung ΔR und einer axialen Ausdehnung ΔL gebildet. Auch hier beträgt das Verhältnis Da/Di etwa 1,3 bis 1,9.

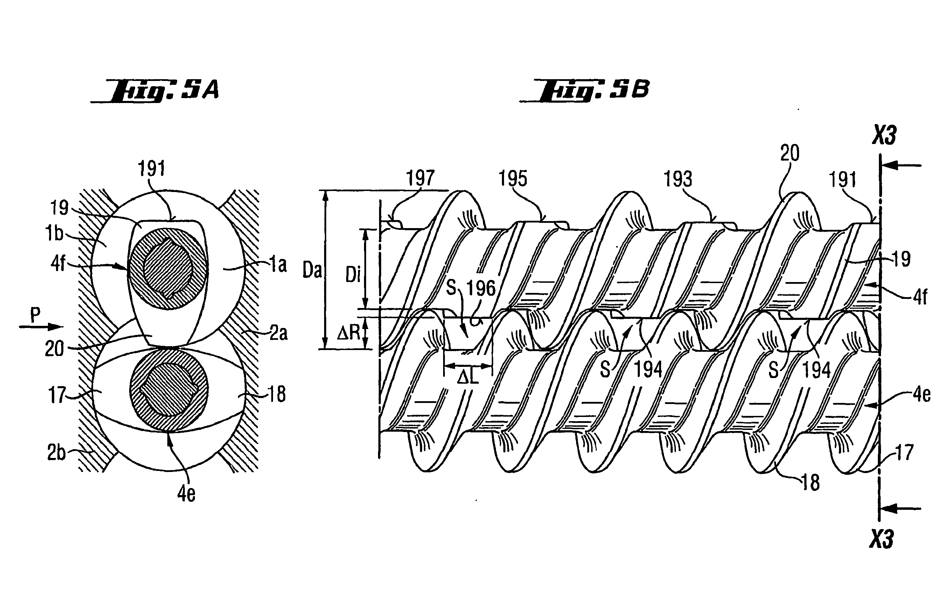

Fig. 5A und 5B zeigen einen Teil des Einführungsbereichs eines erfindungsgemässen Mehrwellen-Extruders gemäss einem dritten Ausführungsbeispiel der vorliegenden Erfindung. Im Gegensatz zu den Figuren 3A und 3B sowie 4A und 4B sind hier nur zwei Förderelemente 4e und 4f aus dem Einzugsbereich gezeigt. Ähnlich wie bei Fig. 3A und 3B sowie Fig. 4A und 4B zeigt Fig. 5A die beiden Förderelemente 4e und 4f in einer zur Axialrichtung A senkrechten Schnittebene X3-X3 der Fig. 5B, während Fig. 5B die beiden Förderelemente 4e und 4f aus der durch den Pfeil P in Fig. 5A gezeigten Blickrichtung zeigt. Die beiden Förderelemente 4e und 4f sind 2-gängige Förderelemente mit jeweils den Gängen 17 und 18 bzw. 19 und 20. Der Gang 19 des Förderelements 4f ist in den Teilbereichen 191, 192, 193, 194, 195, 196 und 197 gekappt, so dass in den gekappten Bereichen zwischen dem Förderelemente 4e mit nicht-gekappten Stegen 17, 18 und den Förderelement 4f mit dem gekapptem Steg 19 auch hier Spalte S mit einer radialen Ausdehnung ΔR und axialen Ausdehnung ΔL gebildet werden. Das Verhältnis Da/Di beträgt im vorliegenden Fall etwa 2,7. In dem vorliegenden Ausführungsbeispiel haben die Spalte S eine besonders grosse radiale Ausdehnung ΔR, was insbesondere für den Einzug von RPET-Schnitzeln geeignet ist. Zwar wird dadurch die Festigkeit (maximal übertragbares Drehmoment) geschwächt, doch erhält man dafür viel Platz für den Transport von RPET-Schnitzeln zwischen den Förderelementen. Im Falle eines Ringextruders wird die Leistungsübertragung vom Antrieb in diesem Fall vorzugsweise so ausgelegt, dass die Drehmomentübertragung an diesen "schmalkernigen" (Da/Di gross) Einzugselementen vorbei geleitet wird und parallel zu den "schmalkernigen" über die vorwiegend an der Unterseite des Kranzes angeordneten "breitkernigen" Förderelemente erfolgt, so dass die "schmalkernigen" Förderelemente/Einzugselemente entlastet werden.

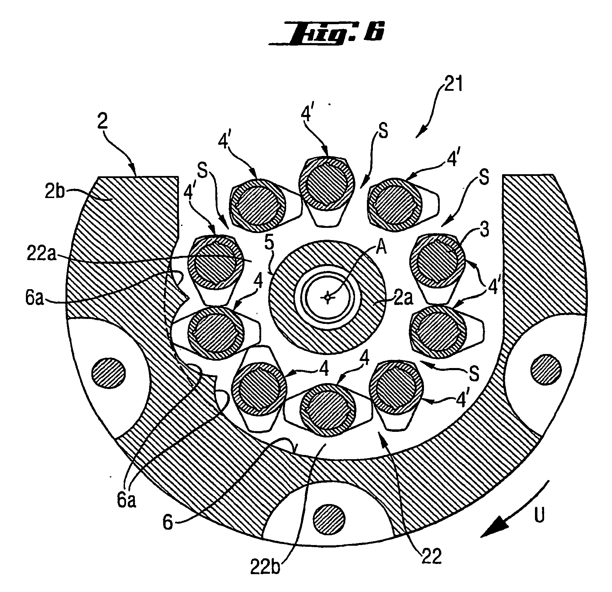

Fig. 6 zeigt den Einfüllbereich eines erfindungsgemässen Ringextruders in einer Schnittansicht senkrecht zur Axialrichtung A. Bei diesem Ausführungsbeispiel handelt es sich um einen Ringextruder mit zehn Wellen 3, auf denen im gezeigten Einfüllbereich Förderelemente 4' mit Steg-Kappung und Förderelemente 4 ohne Steg-Kappung angeordnet sind. Ausserdem ist das Extrudergehäuse 2 im gezeigten Einzugsbereich aufgeweitet. Die Gesamtaufweitung 22 des Gehäuses 2 besteht aus einer Aufweitung 22b des äusseren Prozessraums 1b (siehe Fig. 1) und einer Aufweitung 22a des inneren Prozessraums 1a (siehe Fig. 1). Sowohl die innere Aufweitung 22a als auch die äussere Aufweitung 22b des Extrudergehäuses 2 kommt dadurch zustande, dass sowohl von der radial innen liegenden Fläche 5 als auch von der radial aussen liegenden Fläche 6 des Extrudergehäuses 2 ein Teil des Materials entfernt wurde. Von der radial innen liegenden Fläche 5 wurde die aus den inneren konkaven Zylindersegmenten 5a gebildete innere "Blume" (siege Fig. 1) entfernt, während von der radial aussen liegenden Fläche 6 die durch die äusseren konkaven Zylindersegmente 6a gebildete äussere "Blume" (siehe Fig. 1) entfernt wurde. Lediglich auf der in Fig. 6 linken Seite der radial aussen liegenden Fläche 6 wurde ein Teil der äusseren konkaven Zylindersegmente 6a beibehalten. Diesen drei konkaven äusseren Zylindersegmenten 6a ist jeweils ein Förderelement 4', 4, 4 zugeordnet. Dem obersten der drei äusseren konkaven Zylindersegmente 6a ist ein Förderelement 4' mit Steg-Kappung zugeordnet, während den beiden unteren äusseren konkaven Zylindersegmenten 6a jeweils ein Förderelement 4 ohne Steg-Kappung zugeordnet ist. Zwischen benachbarten Förderelementen 4' mit Steg-Kappung sowie zwischen Förderelementen 4' mit Steg-Kappung und Förderelementen 4 ohne Steg-Kappung werden Schlitze S gebildet. Da sich diese Schlitze S im Betrieb entlang der Axialrichtung (senkrecht zur Zeichenebene) hin und her bewegen, sind in Fig. 6 nur die Schlitze S gezeigt, die in der momentanen Drehstellung der Förderelemente 4' und 4 in die Schnittebene fallen. Selbstverständlich würden sich in der Schnittansicht von Fig. 6 die Schlitze bei einer Weiterdrehung sämtlicher Förderelemente 4' und 4 verlagern, so dass während einer gesamten Umdrehung der Förderelemente 4' und 4 zwischen sämtlichen benachbarten Förderelementen 4' und zwischen sämtlichen benachbarten Förderelementen 4' und 4 mindestens einmal während einer Gesamtumdrehung der Förderelemente 4' und 4 ein Spalt S entsteht. Die Kappung der Förderelemente 4' ist derart bemessen, dass die entstehende Spalte S gross genug sind, dass RPET-Schnitzel ohne weiteres in den inneren aufgeweiteten Prozessraum 22a gelangen können. Ausserdem ist die radiale Aufweitung 22a des inneren Prozessraums 1a entlang des gesamten Umfangs des Kerns 2a ausgebildet, während die radiale Aufweitung 22b des äusseren Prozessraums 1b entlang eines Grossteils des Kranzumfangs entlang der Umfangsrichtung U aufgeweitet ist. Lediglich der weiter oben erwähnte "Rest" der äusseren Blume, der durch die drei äusseren konkaven Zylindersegmente 6a der radial aussen liegenden Fläche 6 gebildet wird, sorgt für einen Abschluss des äusseren Prozessraums 1b auf der in der Zeichnung linken Seite des äusseren Wellenkranzumfangs.

Das Ausführungsbeispiel der Fig. 6 ist besonders vorteilhaft, da es durch insgesamt vier Massnahmen eine Steigerung des Einzugsverhaltens gegenüber dem aus dem Stand der Technik bekannten Ringextruder erzielt:
1. Die zwischen den Förderelementen gebildeten Spalte S im Bereich der Zufuhröffnung 21 und im Bereich der äusseren radialen Aufweitung 22b des äusseren Prozessraums 1b ermöglichen einen erleichterten Übergang von Produkt aus dem äusseren Prozessraum 1b in den inneren Prozessraum 1a.
2. Die innere radiale Aufweitung 22a stellt aufgrund der Kappung der radial innen liegenden Fläche 5 (Entfernung der inneren Blume, siehe Fig. 1) eine Vergrösserung des inneren Prozessraums 1 a dar.
3. Die äussere radiale Aufweitung 22b stellt eine Vergrösserung des äusseren Prozessraums 1b dar (durch Entfernen der äusseren Blume, siehe Fig. 1).
4. Durch die trotz Teil-Kappung von Schneckenelementen nach wie vor fördernde Wirkung sämtlicher Förderelemente 4 und 4' im Einzugsbereich wird das in diesen aufgeweiteten Prozessräumen 1a, 22a und 1b, 22b aufgenommene Produkt stets sofort wegbefördert, so dass eine beachtliche Steigerung der Einzugskapazität erzielt wird. Der erfindungsgemäss aufgeweitete Einzugsbereich von Fig. 6 verengt sich entlang der Axialrichtung A (siehe Fig. 2) zunehmend, so dass das zunächst lockere eingezogene Produkt während seines Einzugs durch die Spalte S und entlang der Umfangsrichtung U und später entlang der Axialrichtung A zunehmend komprimiert und ggf. (im Falle von RPET) aufgeschmolzen wird. Auf diese Weise lässt sich der erfindungsgemässe Extruder auch bei der Beschickung mit anfänglich sehr lockeren (z.B. schnitzelartigen) Schüttgütern mit einem wirtschaftlichen Füllgrad (und somit ausreichenden Durchsatz) betreiben.

**Bezugszeichen**

| | |
|---|---|
| 1 | Hohlraum |
| 1a | innerer Prozessraum |
| 1b | äusserer Prozessraum |
| 2 | Extrudergehäuse |
| 2a | Kern des Extrudergehäuses |
| 2b | Aussengehäuse |
| 3 | Welle |
| 4 | Bearbeitungselement/Förderelemente |
| 4' | Förderelemente mit Steg-Kappung/Spalt |
| 5 | radial innen liegende Fläche |
| 5a | inneres konkaves Zylindersegment |
| 6 | radial aussen liegende Fläche |
| 6a | äusseres konkaves Zylindersegment |
| 7 | Steg |
| 8 | Steg |
| 9 | Steg |
| 10 | Steg |
| 11 | Steg |
| 12 | Steg |
| 13 | Steg |
| 14 | Steg |
| 15 | Steg |
| 16 | Steg |
| 17 | Steg |
| 18 | Steg |
| 19 | Steg |
| 20 | Steg |
| 41 | Steg |
| 42 | Steg |
| 43 | Kern |
| 44 | Kern |
| 4a | förderndes Schneckenelement |
| 4c | förderndes Schneckenelement |
| 4e | förderndes Schneckenelement |
| 4b | förderndes Schneckenelement mit Spalt S |
| 4d | förderndes Schneckenelement mit Spalt S |
| 4f | förderndes Schneckenelement mit Spalt S |
| 21 | Zufuhröffnung |
| 22 | radiale Aufweitung |
| 22a | innere radiale Aufweitung |
| 22b | äussere radiale Aufweitung |
| A | Axialrichtung |
| S | Spalt |
| ΔR | radiale Abmessung des Spalts S |
| ΔL | axiale Abmessung des Spalts S |
| U | Umfangsrichtung |

## Patentansprüche

1. MehrweXen-Extruderzum kontinuierlichen Bearbeiten und/oder Verarbeiten eines Schüttguts, insbesondere eines pulverförmigen, körnigen oder flockiger Produktes, mit mehreren in einem Hohlraum (1) eines Extrudergehäuses (2) kranzartig angeordneten Wellen (3), die parallel zur Axialrichtung (A) des Extruders verlaufen und einen inneren Prozessraum (1a) innerhalb des Kranzes sowie einen äusseren Prozessraum (1b) ausserhalb des Kranzes bilden, wobei die Schnittpunkte, welche von den Achsengeraden der jeweiligen Wellen (3) mit einer gedachten Ebene senkrecht zur Axialrichtung (A) gebildet werden, auf einer Kranzlinie liegen und wobei jede der Wellen eine Anzahl axial aufeinanderfolgender Bearbeilungselemente (4) trägt, von denen zumindest ein Teil fördernd wirkende Elemente (4a; 4c; 4e) sind und mit denen benachbarte Wellen mindestens in Teilbereichen dichtkämmend ineinander greifen, wobei das Extrudergehäuse (2) an der radial innen (5) und der radial aussen (6) liegenden Fläche des Hohlraums (1) mit achsparallelen konkaven Kreissegmenten (5a, 6a) versehen ist, die als Führung für die achsparallelen Wellen (3) mit ihren Bearbeitungselementen (4) an der Innenseite (5a) bzw. an der Aussenseite (6a) des Wellenkranzes (3,...) dienen, und wobei der Extruder an seinem ersten axialen Ende eine zu dem Hohlraum (1) führende Zufuhröffnung (21) sowie an seinem zweiten axialen Ende eine Austrittsöffnung für das zu verarbeitende Produkt aufweist, **dadurch gekennzeichnet, dass** im Bereich der Zufuhröffnung (21) im Extrudergehäuse (2) nur fördernde Schneckenelemente (4a, 4b ; 4c, 4d ; 4e, 4f) mit mindestens einem fördernden Schneckensteg (9, 10; 14, 15, 16, 19, 20) vorhanden sind und dass wenigstens eines der fördernden Schneckenelemente (4a, 4b ; 4c, 4d; 4e, 4f) in mindestens einem Teilbereich (91. 92, 93, 94, 95, 151, 152, 153, 154, 155; 191, 192, 193, 194, 195, 196, 197) bei nach wie vor im gesamten Einzugsbereich vorhandener Förderwirkung entlang der Axialrichtung (A) nicht dichtkämmend ist.

2. Mehrwellen-Extruder nach Anspruch 1, **dadurch gekennzeichnet, dass** das wenigstens eine fördernde Schneckenelement (4b; 4d ; 4f) zum benachbarten Schneckenelement (4a; 4c; 4e) hin einen Spalt (S) längsseits der Schneckenelemente (4a, 4b ; 4c, 4d ; 4e, 4f) aufweist, dessen projezierte Fläche, die in der Ebene liegt, in der die beiden Längsachsen bzw. Drehachsen der beiderseits des Spalts angeordneten Wellen verlaufen, eine radiale Abmessung ΔR und eine axiale Abmessung ΔL längsseits der Schneckenelemente aufweist.

3. Mehrwellen-Extruder nach einem der Ansprüche 1 bis 2, **dadurch gekennzeichnet, dass** das wenigstens eine fördernde Schneckenelement (4b ; 4d ; 4f) zum benachbarten Schneckenelement (4a ; 4c; 4e) einen Spalt (S) bildet, dessen radiale Abmessung ΔR im Bereich zwischen etwa 1/30 und 1/2 des Schneckenwellen-Aussendurchmessers Da, vorzugsweise zwischen 1/10 und 1/4 des Schneckenwellen-Aussendurchmessers liegt, und eine axiale Abmessung ΔL längsseits der Schneckenelemente (4b, 4c) aufweist, die sich aus der Abmessung ΔR und der Steigung des Schneckenelements ergibt und die vorzugsweise etwa 2ΔR beträgt.

4. Mehrwellen-Extruder nach einem der Ansprüche 1 bis 3, **dadurch gekennzeichnet, dass** die Steigung des Steges (9, 10, 14, 15, 16, 19, 20) des Schneckenelementes (4a, 4b; 4c, 4d; 4e, 4f) mindestens das 0,5-fache des Aussendurchmessers Da des Schneckenelementes ist.

5. Mehrwellen-Extruder nach einem der Ansprüche 1 bis 3, **dadurch gekennzeichnet, dass** die Steigung des Steges (9, 10; 14, 15, 16; 19, 20) des Schneckenelementes (4a, 4b; 4c, 4d, 4e, 4f) mindestens das 1,0-fache des Aussendurchmessers Da des Schneckenelementes ist.

6. Mehrwellen-Extruder nach einem der vorhergehenden Ansprüche, **dadurch gekennzeichnet, dass** das Verhältnis von Aussendurchmesser Da zu Innendurchmesser Di des Schneckenelementes zwischen 1,3 und 1,9 liegt.

7. Mehrwellen-Extruder nach einem der vorhergehenden Ansprüche, **dadurch gekennzeichnet, dass** die Vorderflanken des fördernden Schneckenelements zumindest am radialen Randbereich seiner Stege senkrecht zur Axialrichtung (A) verlaufen.

8. Mehrwellen-Extruder nach einem der vorhergehenden Ansprüche, **dadurch gekennzeichnet, dass** die Hinterflanken des fördernden Schneckenelements zumindest am radialen Randbereich seiner Stege senkrecht zur Axialrichtung (A) verlaufen.

9. Mehrwellen-Extruder nach einem der Ansprüche 1 bis 6, **dadurch gekennzeichnet, dass** die Vorderflanken am radialen Randbereich der Stege in der Förderrichtung überhängend gegenüber der Senkrechten zur Axialrichtung (A) verlaufen.

10. Mehrwellen-Extruder nach einem der Ansprüche 1 bis 6, **dadurch gekennzeichnet, dass** die Vorderflanken zumindest am Randbereich der Stege konkav ausgehöhlt sind.

11. Mehrwellen-Extruder nach einem der Ansprüche 1 bis 6, **dadurch gekennzeichnet, dass** die Vorderflanke am Randbereich der Stege hinterschnitten sind.

12. Mehrwellen-Extruder nach einem der vorhergehenden Ansprüche, **dadurch gekennzeichnet, dass** der sich im Bereich der Zufuhröffnung (21) befindende axiale Teilbereich des die Wellen (3) enthaltenden Hohlraums (1) radial aufgeweitet ist und sich die radiale Aufweitung (22) entlang eines Teils des Wellenkranzes (3,...) in dessen Umfangsrichtung (U) erstreckt.

13. Mehrwellen-Extruder nach einem der vorhergehenden Ansprüche, **dadurch gekennzeichnet, dass** sich die Aufweitung (22) entlang des Umfangs (U) des Wellenkranzes (3,...) beiderseits von der Zufuhröffnung (21) weg erstreckt und sich jeweils zwischen der radial aussen liegenden Fläche (6a) des Hohlraums (1) und dem Wellenkranz (3,...) erstreckt.

14. Mehrwellen-Extruder nach einem der vorhergehenden Ansprüche, **dadurch gekennzeichnet, dass** an der Zufuhröffnung (21) eine Stopfschnecke angebracht ist.

15. Mehrwellen-Extruder nach einem der vorhergehenden Ansprüche, **dadurch gekennzeichnet, dass** das Extrudergehäuse (2) in der Nähe der Zufuhröffnung (21) Entlüftungsöffnungen aufweist.

16. Mehrwellen-Extruder nach einem der vorhergehenden Ansprüche, **dadurch gekennzeichnet, dass** an der Zufuhröffnung (21) ein Druck unterhalb des atmosphärischen Druckes anlegbar ist.

17. Mehrwellen-Extruder nach einem der vorhergehenden Ansprüche, **dadurch gekennzeichnet, dass** bei mindestens einem mehrgängigen Förderelement (4a, 4b; 4c, 4d; 4e, 4f) im Einfüllbereich mindestens ein Steg entfernt ist.

18. Verfahren zum Befüllen eines Mehrwellen-Extruders gemäss einem der Ansprüche 1 bis 17 mit einem zu bearbeitenden und/oder zu verarbeitenden Schüttgut, insbesondere einem pulverförmigen, körnigen oder fiockigen Produkt, wobei das Produkt an der Aussenseite (6a) des Wellenkranzes (3,...) dem äusseren Prozessraum (1 b) zugeführt wird, **dadurch gekennzeichnet, dass** im Bereich der Zufuhröffnung der gesamte innere Prozessraum (1a) durch fördernde Schneckenelemente ständig entleert wird und durch das in mindestens einem Teilbereich entlang der Axialrichtung nicht-dichtkämmende wenigstens eine fördernde Schneckenelement ein Teil des Produktstroms in den inneren Prozessraum (1a) gezogen und axial befördert wird.

19. Verfahren nach Anspruch 18, **dadurch gekennzeichnet, dass** das Einziehen eines Teils des Produktstroms in den inneren Prozessraum durch den mindestens einen Spalt (S) erfolgt, der sich zwischen dem wenigstens einen fördernden Schneckenelement und einem benachbarten Schneckenelement bildet.

20. Verfahren nach einem der Ansprüche 18 oder 19, **dadurch gekennzeichnet, dass** das Heranführen des Produktes an die Aussenseite (6a) des Wellenkranzes (3,...) durch Schwerkraft erfolgt.

21. Verfahren nach einem der Ansprüche 18 bis 20, **dadurch gekennzeichnet, dass** das Produkt an die Aussenseite (6a) der Wellenkranzes (3,...) mittels einer Stopfschnecke herangeführt und gegen die Aussenseite (6a) gepresst wird.

22. Verfahren nach einem der Ansprüche 18 bis 21, **dadurch gekennzeichnet, dass** der Prozessraum (1a, 1b) im Bereich der Zufuhröffnung (21) auf einem Druck unterhalb des Atmosphärendrucks gehalten wird.

## Claims

1. A multi-screw extruder for continuously machining and/or processing bulk material, in particular a powdery, grainy or flaky product, with several screws (3) arranged in a collar in a cavity (1) of an extruder casing (2), which run parallel to the axial direction (A) of the extruder, and form an internal processing zone(la) within the collar as well as an external processing zone (1b) outside the collar, wherein the intersecting points, which are formed by the axial lines of the respective screws (3) with an imagined plane perpendicular to the axial direction (A) lie on a collar line, and wherein each of the screws carries a number of axially consecutive processing elements (4), of which at least a portion are elements (4a; 4c; 4e) that have a conveying effect, and with which adjacent screws intermesh tightly at least in partial areas, wherein the extruder casing (2) is provided with axially parallel, concave circular segments (5a, 6a) at the radially inner (5) and radially outer (6) surface of the cavity (1), which serve as a guide for the axially parallel screws (3) with their processing elements (4) on the inside (5a) or outside (6a) of the screw collar (3, ...), and wherein the first axial end of the extruder exhibits a feedhole (21) leading to the cavity (1), while the second axial end of the extruder exhibits an outlet for the product to be processed, **characterized in that** only conveying screw elements (4a, 4b; 4c, 4d; 4e, 4f) with at least one conveying screw web (9, 10; 14, 15, 16; 19, 20) are present in the area of the feedhole (21) in the extruder casing (2), and that at least one of the conveying screw elements (4a, 4b; 4c, 4d; 4e, 4f) is not tightly intermeshing in at least one partial area (91, 92, 93, 94, 95; 151, 152, 153, 154, 155; 191, 192, 193, 194, 195, 196, 197) along the axial direction (A) while the conveying effect is still present in the entire feed zone.

2. The multi-screw extruder according to claim 1, **characterized in that** the at least one conveying screw element (4b; 4d; 4f) exhibits a gap (S) alongside the screw elements (4a, 4b; 4c, 4d; 4e, 4f) toward the adjacent screw element (4a; 4c; 4e), the projected surface of which lies in a plane in which the two longitudinal axes or rotational axes of the screws on either side of the gap run, and has a radial dimension ΔR and axial dimension ΔL alongside the screw elements.

3. The multi-screw extruder according to one of claims 1 to 2, **characterized in that** the at least one conveying screw element (4b; 4d; 4f) forms a gap (S) toward the adjacent screw element(4a; 4c; 4e), which has a radial dimension ΔR ranging between about 1/30 and 1/2 of the external screw shank diameter Da, in particular between 1/10 and 1/4 of the external screw shank diameter, and an axial dimension ΔL alongside the screw elements (4b, 4c) derived from the dimension ΔR and the slope of the screw elements, preferably measuring roughly 2ΔR.

4. The multi-screw extruder according to one of claims 1 to 3, **characterized in that** the slope of the web (9, 10; 14, 15, 16; 19, 20) of the screw element (4a,4b; 4c, 4d; 4e, 4f) is at least 0.5 times the external diameter Da of the screw element.

5. The multi-screw extruder according to one of claims 1 to 3, **characterized in that** the slope of the web (9, 10; 14, 15, 16; 19, 20) of the screw element (4a, 4b; 4c, 4d; 4e, 4f) is at least 1.0 times the external diameter Da of the screw element.

6. The multi-screw extruder according to one of the preceding claims, **characterized in that** the ratio between the external diameter Da and internal diameter Di of the screw element best ranges between 1.3 and 1.9.

7. The multi-screw extruder according to one of the preceding claims, **characterized in that** the front edges of the conveying screw element run perpendicular to the axial direction (A), at least in the radial edge area of its webs.

8. The multi-screw extruder according to one of the preceding claims, **characterized in that** the rear edges of the conveying screw element run perpendicular to the axial direction (A), at least in the radial edge area of its webs.

9. The multi-screw extruder according to one of claims 1 to 6, **characterized in that** the front edges at the radial edge area of the webs overhang the perpendicular to the axial direction (A) in the conveying direction.

10. The multi-screw extruder according to one of claims 1 to 6, **characterized in that** the front edges exhibit concave recesses, at least in the edge area of the webs.

11. The multi-screw extruder according to one of claims 1 to 6, **characterized in that** the front edges are back-cut at the edge area of the webs.

12. The multi-screw extruder according to one of the preceding claims, **characterized in that** the axial partial area of the cavity (1) containing the screws (3) located in proximity to the feedhole (21) is radially expanded, and this radial expansion (22) extends along a portion of the screw collar (3, ...) in its circumferential direction (U).

13. The multi-screw extruder according to one of the preceding claims, **characterized in that** the expansion (22) extends away from the feedhole (21) along the circumference (U) of the screw collar (3, ...) on either side, and extends between the respective radially outer surface (6a) of the cavity (1) and the screw collar (3, ...).

14. The multi-screw extruder according to one of the preceding claims, **characterized in that** a stuffing screw is situated at the feedhole (21).

15. The multi-screw extruder according to one of the preceding claims, **characterized in that** the extruder casing (2) exhibits vent holes near the feedhole (21).

16. The multi-screw extruder according to one of the preceding claims, **characterized in that** a pressure below atmospheric pressure can be applied at the feedhole (21).

17. The multi-screw extruder according to one of the preceding claims, **characterized in that** at least one web is removed in the fill zone for at least one multi-screw conveying element (4a, 4b; 4c, 4d; 4e, 4f).

18. A method for filling a multi-screw extruder according to one of claims 1 to 17 with a bulk material to be processed and/or machined, in particular a powdery, grainy or flaky product, wherein the product is supplied at the outside (6a) of the screw collar (3, ...) to the external processing zone (1b), **characterized in that** the entire internal processing zone (1a) is continuously evacuated via conveying screw elements in the area of the feedhole, and the at least one screw element that is non-tightly meshing along the axial direction in at least one partial area aspirates a portion of the supplied product stream into the internal processing zone (1a) and axially conveys it.

19. The method according to claim 18, **characterized in that** a portion of the product stream is drawn into the internal processing zone through the at least one gap (S) that forms between the at least one conveying screw element and an adjacent screw element.

20. The method according to one of claims 18 or 19, **characterized in that** the product is supplied to the outside (6a) of the screw collar (3, ...) via gravity.

21. The method according to one of claims 18 to 20, **characterized in that** the product is supplied to the outside (6a) of the screw collar (3, ...) via a stuffing screw and pressed against the outside (6a).

22. The method according to one of claims 18 to 21, **characterized in that** the processing zone (1a, 1b) is held at a pressure below atmospheric pressure in the area of the feedhole (21).

## Revendications

1. Extrudeuse à arbres multiples pour le traitement et/ou la mise en oeuvre en continu d'un produit en vrac, notamment d'un produit pulvérulent, granuleux ou floconneux, avec plusieurs arbres (3) disposés sous forme de couronne dans une cavité (1) d'un carter d'extrudeuse (2), qui s'étendent à la parallèle de la direction axiale (A) de l'extrudeuse et qui forment un espace de processus interne (1a) à l'intérieur de la couronne, ainsi qu'un espace de procédé externe (1b) à l'extérieur de la couronne, les points d'intersection qui sont formés par les droites axiales des arbres concernés (3) avec un plan virtuel à la perpendiculaire de la direction axiale (A) se situant sur une ligne en couronne et chacun des arbres portant un nombre d'éléments de traitement (4) consécutifs en direction axiale, dont au moins une partie consiste dans des éléments à effet de transport (4a ; 4c ; 4e) et dans lesquels des arbres voisins s'engrènent à engagement serré au moins dans des zones partielles, le carter de l'extrudeuse (2) étant muni sur la surface intérieure radiale (5) et sur la surface extérieure radiale (6) de la cavité (1) de segments circulaires concaves (5a, 6a), parallèles à l'axe, servant de guidage pour les arbres (3) parallèles à l'axe, avec leur éléments de traitement (4) sur la face intérieure (5a) ou sur la face extérieure (6a) de la couronne d'arbres (3, ...) et l'extrudeuse comportant sur sa première extrémité axiale un orifice d'alimentation (21) menant vers la cavité (1), ainsi que sur sa deuxième extrémité axiale un orifice de sortie pour le produit à mettre en oeuvre, **caractérisée en ce que** dans la région de l'orifice d'alimentation (21) dans le carter de l'extrudeuse (2) seulement des éléments transporteurs à vis sans fin (4a, 4b ; 4c, 4d ; 4e, 4f) avec au moins un pas de vis transporteur (9, 10 ; 14, 15, 16 ; 19, 20) sont présents, et qu' au moins un élément transporteur à vis sans fin (4a, 4b ; 4c, 4d ; 4e, 4f), dans au moins un zone partielle (91, 92, 93, 94, 95 ; 151, 152, 153, 154, 155 ; 191, 192, 193, 194, 195, 196, 197) n'est pas à engagement serré, le long de la direction axiale (A), avec l'effet de transport étant encore présente dans tout la zone de remplissage.

2. Extrudeuse à arbres multiples selon la revendication 1, **caractérisée en ce que** le au moins un élément transporteur à vis sans fin (4b ; 4d ; 4f) présente par rapport à l'élément à vis sans fin voisin (4a ; 4c ; 4e) un interstice (S), sur le côté longitudinal des éléments à vis sans fin (4a, 4b ; 4c, 4d ; 4e, 4f), dont la surface projetée qui se situe dans le plan, dans lequel s'étendent les deux axes longitudinaux ou axes de rotation des arbres situés de part et d'autre de l'interstice a une dimension radiale ΔR et une dimension axiale ΔL sur le côté longitudinal des éléments à vis sans fin.

3. Extrudeuse à arbres multiples selon la revendication 1 à 2, **caractérisée en ce que** le au moins un élément transporteur à vis sans fin (4b ; 4d ; 4f) présente par rapport à l'élément à vis sans fin voisin (4a ; 4c ; 4e) un interstice (S), dont la dimension radiale ΔR est de l'ordre d'environ 1/30 et 1/2 du diamètre extérieur de l'arbre à vis sans fin Da, de préférence entre 1/10 et 1/4 du diamètre extérieur de l'arbre à vis sans fin et une dimension axiale ΔL, sur le côté longitudinal de l'élément à vis sans fin (4b, 4c), qui résulte de la dimension ΔR et du pas de vis de l'élément à vis sans fin et qui est de préférence de 2ΔR.

4. Extrudeuse à arbres multiples selon l'une quelconque des revendications 1 à 3, **caractérisée en ce que** le pas de vis (9, 10 ; 14, 15, 16 ; 19, 20) de l'élément à vis sans fin (4a, 4b ; 4c, 4d ; 4e, 4f) correspond au moins à 0,5 fois le diamètre extérieur Da de l'élément à vis sans fin.

5. Extrudeuse à arbres multiples selon l'une quelconque des revendications 1 à 3, **caractérisée en ce que** le pas de vis (9, 10 ; 14, 15, 16 ; 19, 20) de l'élément à vis sans fin (4a, 4b ; 4c, 4d ; 4e, 4f) correspond au moins à 1,0 fois le diamètre extérieur Da de l'élément à vis sans fin.

6. Extrudeuse à arbres multiples selon l'une quelconque des revendications précédentes, **caractérisée en ce que** le rapport du diamètre extérieur Da au diamètre intérieur Di de l'élément à vis sans fin se situant entre 1,3 et 1,9.

7. Extrudeuse à arbres multiples selon l'une quelconque des revendications précédentes, **caractérisée en ce que** les flancs antérieurs de l'élément transporteur à vis sans fin s'étendent au moins sur la zone marginale radiale de ses pas, à la perpendiculaire de la direction axiale (A).

8. Extrudeuse à arbres multiples selon l'une quelconque des revendications précédentes, **caractérisée en ce que** les flancs postérieurs de l'élément transporteur à vis sans fin s'étendent au moins sur la zone marginale radiale de ses pas, à la perpendiculaire de la direction axiale (A).

9. Extrudeuse à arbres multiples selon l'une quelconque des revendications 1 à 6, **caractérisée en ce que** les flancs antérieurs sur la zone marginale radiale des pas s'étendent en saillie dans la direction de transport, par rapport à la perpendiculaire de la direction axiale (A).

10. Extrudeuse à arbres multiples selon l'une quelconque des revendications 1 à 6, **caractérisée en ce que** les flancs antérieurs présentent un creux concave, au moins dans la zone marginale des pas.

11. Extrudeuse à arbres multiples selon l'une quelconque des revendications 1 à 6, **caractérisée en ce que** les flancs antérieurs présentent une contre-dépouille dans la zone marginale des pas.

12. Extrudeuse à arbres multiples selon l'une quelconque des revendications précédentes, **caractérisée en ce que** la zone partielle axiale de la cavité (1) contenant les arbres (3) qui se trouve dans la région de l'orifice d'alimentation (21) est évasée en direction radiale et **en ce que** l'évasement radial (22) s'étend le long d'une partie de la couronne d'arbres (3,...), dans sa direction périphérique (U).

13. Extrudeuse à arbres multiples selon l'une quelconque des revendications précédentes, **caractérisée en ce que** l'évasement (22) s'étend le long de la périphérie (U) de la couronne d'arbres (3,...), dans la direction périphérique, en s'éloignant de part et d'autre de l'orifice d'alimentation (21) et s'étend respectivement entre la surface radiale extérieure (6a) de la cavité (1) et la couronne d'arbres (3,...).

14. Extrudeuse à arbres multiples selon l'une quelconque des revendications précédentes, **caractérisée en ce que**, une vis de gavage est montée sur l'orifice d'alimentation (21).

15. Extrudeuse à arbres multiples selon l'une quelconque des revendications précédentes, **caractérisée en ce que**, à proximité de l'orifice d'alimentation (21), le carter de l'extrudeuse (2) comporte des orifices de ventilation.

16. Extrudeuse à arbres multiples selon l'une quelconque des revendications précédentes, **caractérisée en ce que**, une pression inférieure à la pression atmosphérique est applicable à l'orifice d'alimentation(21).

17. Extrudeuse à arbres multiples selon l'une quelconque des revendications précédentes, **caractérisée en ce que**, sur au moins un élément de transport à filets multiples (4a, 4b ; 4c, 4d ; 4e, 4f), au moins un pas est retiré dans la zone de remplissage.

18. Procédé de remplissage d'une extrudeuse à arbres multiples selon l'une quelconque des revendications 1 à 17, avec un produit en vrac à traiter et/ou à mettre en oeuvre, notamment un produit pulvérulent, granuleux ou floconneux, le produit étant amené vers la face extérieure (6a) de la couronne d'arbres (3,...) sur l'espace de processus externe (1b), **caractérisé en ce que**, dans la région de l'orifice d'alimentation, l'ensemble de l'espace de processus interne (1a) est constamment vidé par des éléments transporteurs à vis sans fin, et une partie du flux de produit est tirée dans l'espace de processus interne (1a) et transportée en direction axiale par le au moins un élément transporteur à vis sans fin qui au moins dans une zone partielle, le long de la direction axiale n'est pas à engagement serré.

19. Procédé selon la revendication 18, **caractérisé en ce que** l'entraînement d'une partie du flux de produit dans l'espace de processus interne est assuré à travers le au moins un interstice (S), qui se forme entre le au moins un élément transporteur à vis sans fin et un élément à vis sans fin voisin.

20. Procédé selon l'une quelconque des revendications 18 à 19, **caractérisé en ce que** l'aménage du produit sur la face extérieure (6a) de la couronne d'arbres (3,...) est assuré par force de gravité.

21. Procédé selon l'une quelconque des revendications 18 à 20, **caractérisé en ce que** le produit est amené sur la face extérieure (6a) de la couronne d'arbres (3,...) au moyen d'une vis de gavage et pressé contre la face extérieure (6a).

22. Procédé selon l'une quelconque des revendications 18 à 21, **caractérisé en ce que**, dans la région de l'orifice d'alimentation (21), l'espace de processus (1a, 1b) est maintenu à une pression inférieure à la pression atmosphérique.
